(19) Europäisches Patentamt
European Patent Office
Office européen des brevets

(11) **EP 3 910 507 B1**

(12) **EUROPEAN PATENT SPECIFICATION**

(45) Date of publication and mention
of the grant of the patent:
**07.05.2025 Bulletin 2025/19**

(21) Application number: **19919494.5**

(22) Date of filing: **13.03.2019**

(51) International Patent Classification (IPC):
*G06F 21/32* (2013.01)   *H04L 9/40* (2022.01)

(52) Cooperative Patent Classification (CPC):
**H04L 63/0861; G06F 21/32**

(86) International application number:
**PCT/CN2019/077991**

(87) International publication number:
**WO 2020/181523 (17.09.2020 Gazette 2020/38)**

(54) **METHOD AND APPARATUS FOR WAKING UP SCREEN**

VERFAHREN UND VORRICHTUNG ZUM AUFWECKEN EINES BILDSCHIRMS

PROCÉDÉ ET APPAREIL DE RÉVEIL D'ÉCRAN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.11.2021 Bulletin 2021/46**

(73) Proprietor: **Huawei Technologies Co., Ltd.
Longgang
Shenzhen, Guangdong 518129 (CN)**

(72) Inventors:
• **LIU, Cuijun
Shenzhen, Guangdong 518129 (CN)**
• **NA, Bailin
Shenzhen, Guangdong 518129 (CN)**
• **WU, Xuecheng
Shenzhen, Guangdong 518129 (CN)**

• **ZHAN, Wangpeng
Shenzhen, Guangdong 518129 (CN)**
• **HUANG, Gengshuai
Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
WO-A1-2014/124663     WO-A1-2019/006985
CN-A- 105 912 903     CN-A- 106 485 123
CN-A- 106 878 559     CN-A- 108 549 802
CN-A- 108 549 802     CN-A- 108 830 061
CN-A- 108 875 333     US-A1- 2010 079 508
US-A1- 2011 317 872     US-A1- 2018 367 656
US-A1- 2020 128 174     US-B1- 10 027 883

## Description

## TECHNICAL FIELD

This application relates to the field of electronic devices, and more specifically, to a screen wakeup method and apparatus.

## BACKGROUND

With development of an artificial intelligence (AI) technology on a terminal device, a person and user behavior may be perceived at all times by using the AI technology, thereby improving user stickiness, and providing a more intelligent service for a user. Before the terminal device is used, a standby wakeup technology needs to be performed. The standby wakeup technology means that a terminal device in a sleep or standby state may be woken up in advance, that is, a screen of the terminal device needs to be woken up, so that a subsequent functional operation can be performed.

In the prior art, for the standby wakeup technology, for example, iris information of the user is obtained for authentication of gaze identification and owner identification. However, the technology relies on an obtained pupil image for identification. When the pupil image is obtained by using a general front-facing camera, the image has relatively low quality, which severely affects accuracy of a wakeup result. For another example, a high-quality pupil image may be obtained by using a special iris camera, to obtain a more accurate wakeup result, which, however, increases production costs of the device. Therefore, how to improve accuracy of screen wakeup of the device without significantly increasing costs becomes an urgent problem to be resolved.

US 2011/0317872 A1 relates to methods, systems, and apparatus, including computer programs encoded on a computer storage medium, for reducing the impact of lighting conditions and biometric distortions, while providing a low-computation solution for reasonably effective (low threshold) face recognition. The methods include processing a captured image of a face of a user seeking to access a resource by conforming a subset of the captured face image to a reference model. The reference model corresponds to a high information portion of human faces. The methods further include comparing the processed captured image to at least one target profile corresponding to a user associated with the resource, and selectively recognizing the user seeking access to the resource based on a result of said comparing.

WO 2014/124663 A1 relates to a mobile electronic device capable of automatic display screen state control, the mobile electronic device comprising a processor configured to control the operation of said mobile electronic device, a front-facing display screen coupled to said processor and arranged on a front side of said mobile electronic device, said front-facing display screen having an on-state and an off-state, a movement sensor coupled to said processor, said movement sensor being configured to detect movement of the mobile electronic device, a front-facing camera arranged on the front side of the device, said front-facing camera being coupled to said processor and configured to capture images, said processor being configured to control the on-state and off-state of said display screen based on movement detection of said movement sensor and on one or more images captured by said front-facing camera, said processor configured to analyze the one or more images to determine whether a user's face is present in the one or more images. WO 2019/006985 A1 relates to a virtual image display apparatus including a gaze monitor configured to detect a gaze direction of a user and determine a gaze point based on the gaze direction; a display device configured to output an image; a projection lens configured to project the image onto a depth plane corresponding to the gaze point; and a controller configured to control a focal length of the projection lens based on a change of the gaze point.

US 10 027 883 B1 relates to enabling a primary user to be identified and tracked using stereo association and multiple tracking algorithms.

## SUMMARY

The invention is set out in the appended claims. This application provides a screen wakeup method and apparatus, to improve accuracy of screen wakeup of a device without significantly increasing costs.

According to a first aspect, a screen wakeup method is provided, including: obtaining M image frames, where each image frame includes a first face image, and M is an integer greater than or equal to 1; determining, based on a preconfigured neural network, whether each first face image matches a preset face image and belongs to a user who is gazing at a screen of a device; and when each first face image matches the preset face image and belongs to the user, switching the screen from a screen-off state to a screen-on state.

According to the screen wakeup method provided in this application, gaze identification and face image identification are performed based on the preconfigured neural network by using the first face image of each of the M obtained image frames, that is, it is determined whether each first face image matches the preset face image and belongs to the user who is gazing at the screen of the device. This can avoid a problem that accuracy of a wakeup result is severely affected by relatively low quality of a pupil image obtained by a front-facing camera, thereby improving accuracy of screen wakeup of the device without significantly increasing device costs.

In a possible implementation, a current image frame may be obtained, where the current image frame includes a first face image, and whether the first face image in the current image frame matches the preset face image and belongs to the user who is gazing at the screen of the device is determined based on the preconfigured neural network; and when the first face image in the current image frame matches the preset face image and belongs to the user who is gazing at the screen of the device, the screen is switched from the screen-off state to the screen-on state.

With reference to the first aspect, in some implementations of the first aspect, the determining, based on a preconfigured neural network, whether each first face image matches a preset face image and belongs to a user who is gazing at a screen of a device includes: determining, by using the preconfigured neural network, whether each first face image belongs to the user; and when each first face image belongs to the user, determining, by using the preconfigured neural network, whether each first face image matches the preset face image.

According to the screen wakeup method provided in this embodiment of this application, whether a user corresponding to a first face image is gazing at the screen may be first determined by using the preconfigured neural network. When the user corresponding to the first face image is gazing at the screen, that is, when the first face image belongs to the user, whether the first face image is the preset face image may be determined by using the preconfigured neural network. When the foregoing conditions are both met, the screen may be switched from the screen-off state to the screen-on state, to wake up the screen of the device.

In a possible implementation, the determining, based on a preconfigured neural network, whether each first face image matches a preset face image and belongs to a user who is gazing at a screen of a device includes: determining, by using the preconfigured neural network, whether each first face image matches the preset face image; and when each first face image matches the preset face image, determining, by using the preconfigured neural network, whether each first face image belongs to the user.

According to the screen wakeup method provided in this embodiment of this application, whether a first face image matches the preset face image may be first determined by using the preconfigured neural network. When the first face image matches the preset face image, whether a corresponding user is gazing at the screen, that is, whether the first face image belongs to the user, may be determined by using the preconfigured neural network. When the foregoing conditions are both met, the screen may be switched from the screen-off state to the screen-on state, to wake up the screen of the device.

It should be noted that in this application, whether the first face image belongs to the user who is gazing at the screen of the device and whether the first face image matches the preset face image may be determined by using a same preconfigured neural network, or two different preconfigured neural networks.

With reference to the first aspect, in some implementations of the first aspect, the determining, by using the preconfigured neural network, whether each first face image belongs to the user includes: determining, by using the preconfigured neural network, a probability value that each first face image belongs to the user; and when the probability value is greater than a preset threshold, determining that each first face image belongs to the user.

According to the screen wakeup method provided in this embodiment of this application, a probability value that a user corresponding to a first face image is gazing at the screen of the device may be determined by using the preconfigured neural network, to determine whether the user corresponding to the first face image is the user who is gazing at the screen of the device.

With reference to the first aspect, in some implementations of the first aspect, after the obtaining M image frames, the method further includes: determining a first face box in each image frame, where the first face box is a face box with a largest area in at least one face box included in each image frame; and determining the first face image based on a second face image located in the first face box.

According to the screen wakeup method provided in this embodiment of this application, a first face box with a largest area may be determined based on an area of at least one face box included in an image frame, and a face image region in the image frame may be positioned based on the first face box, to determine a second face image.

With reference to the first aspect, in some implementations of the first aspect, the method further includes: obtaining face direction information, where the face direction information is used to indicate a direction of the second face image; and the determining the first face image based on a second face image located in the first face box includes: when the direction of the second face image does not match a preset standard direction, rotating the second face image, to obtain the first face image matching the preset standard direction.

According to the screen wakeup method provided in this embodiment of this application, to avoid relatively high algorithm complexity of the preconfigured neural network and reduce power consumption of the preconfigured neural network, face direction information may be obtained, and when the face direction information does not match the preset standard direction, rotation may be performed, and a processed face image is then input into the preconfigured neural network.

In a possible implementation, the method further includes: obtaining face direction information, where the face direction information is used to indicate a direction of the second face image; and the determining the first face image based on a second face image located in the first face box includes: when the direction of the second face image matches a preset standard direction, using the second face image as the first face image.

With reference to the first aspect, in some implementations of the first aspect, the obtaining M image frames includes: obtaining the M image frames when the screen is in the screen-off state.

According to the screen wakeup method provided in this application, whether the screen of the device is in the screen-off state may be periodically detected, and when it is detected that the screen is in the screen-off state, M image frames may be obtained. For example, one or more image frames may be obtained at a time, to obtain the M image frames. With reference to the first aspect, in some implementations of the first aspect, the preconfigured neural network is a deep neural network.

For example, the preconfigured neural network may be a fully connected neural network, or may be a convolutional neural network.

According to a second aspect, a screen wakeup apparatus is provided, where the apparatus includes: an obtaining unit, configured to obtain M image frames, where each image frame includes a first face image, and M is an integer greater than or equal to 1; a processing unit, configured to determine, based on a preconfigured neural network, whether each first face image matches a preset face image and belongs to a user who is gazing at a screen of a device; and a wakeup unit, configured to: when each first face image matches the preset face image and belongs to the user, switch the screen from a screen-off state to a screen-on state.

According to the screen wakeup apparatus provided in this application, gaze identification and face image identification are performed based on the preconfigured neural network by using the first face image of each of the M obtained image frames, that is, it is determined whether each first face image matches the preset face image and belongs to the user who is gazing at the screen of the device. This can avoid a problem that accuracy of a wakeup result is severely affected by relatively low quality of a pupil image obtained by a front-facing camera, thereby improving accuracy of screen wakeup of the device without significantly increasing device costs.

In a possible implementation, the obtaining unit may be configured to obtain a current image frame, where the current image frame includes a first face image, and the processing unit may be configured to determine, based on the preconfigured neural network, whether the first face image in the current image frame matches the preset face image and belongs to the user who is gazing at the screen of the device; and the wakeup unit may be configured to: when the first face image in the current image frame matches the preset face image and belongs to the user who is gazing at the screen of the device, switch the screen from the screen-off state to the screen-on state.

With reference to the second aspect, in some implementations of the second aspect, the processing unit is specifically configured to: determine, by using the preconfigured neural network, whether each first face image belongs to the user; and when each first face image belongs to the user, determine, by using the preconfigured neural network, whether each first face image matches the preset face image.

In a possible implementation, the processing unit is specifically configured to: determine, by using the preconfigured neural network, whether each first face image matches the preset face image; and when each first face image matches the preset face image, determine, by using the preconfigured neural network, whether each first face image belongs to the user.

It should be noted that in this application, whether the first face image belongs to the user who is gazing at the screen of the device and whether the first face image matches the preset face image may be determined by using a same preconfigured neural network, or two different preconfigured neural networks.

With reference to the second aspect, in some implementations of the second aspect, the processing unit is specifically configured to: determine, by using the preconfigured neural network, a probability value that each first face image belongs to the user; and when the probability value is greater than a preset threshold, determine that each first face image belongs to the user.

With reference to the second aspect, in some implementations of the second aspect, the processing unit is further configured to: determine a first face box in each image frame, where the first face box is a face box with a largest area in at least one face box included in each image frame; and determine the first face image based on a second face image located in the first face box.

With reference to the second aspect, in some implementations of the second aspect, the obtaining unit is further configured to: obtain face direction information, where the face direction information is used to indicate a direction of the second face image; and the processing unit is specifically configured to: when the direction of the second face image does not match a preset standard direction, rotate the second face image, to obtain the first face image matching the preset standard direction.

In a possible implementation, the obtaining unit is further configured to: obtain face direction information, where the face direction information is used to indicate a direction of the second face image; and the processing unit is specifically configured to: when the direction of the second face image matches a preset standard direction, use the second face image as the first face image.

With reference to the second aspect, in some implementations of the second aspect, the obtaining unit is specifically configured to: obtain the M image frames when the screen is in the screen-off state.

With reference to the second aspect, in some implementations of the second aspect, the preconfigured neural network is a deep neural network.

According to a third aspect, a screen wakeup apparatus is provided, including a processor and a memory. The memory is configured to store a computer program, and the processor is configured to invoke the computer program from the memory and run the computer program, to enable the screen wakeup apparatus to perform the screen wakeup method in the first aspect and the possible implementations of the first aspect.

Optionally, there are one or more processors and one or more memories.

Optionally, the memory may be integrated with the processor, or the memory and the processor are separated.

According to a fourth aspect, a computer program product is provided. The computer program product includes a computer program (which may also be referred to as code or instructions). When the computer program is run, a computer or at least one processor is enabled to perform the method in the first aspect and the implementations of the first aspect.

According to a fifth aspect, a computer-readable medium is provided. The computer-readable medium stores a computer program (which may also be referred to as code or instructions). When the computer program is run on a computer or at least one processor, the computer or the processor is enabled to perform the method in the first aspect and the implementations of the first aspect.

According to a sixth aspect, a chip system is provided. The chip system includes a processor, configured to support a server in a computer in implementing functions in the first aspect and the implementations of the first aspect.

## BRIEF DESCRIPTION OF DRAWINGS

FIG. 1 is a schematic diagram of a model of a convolutional neural network according to an embodiment of this application;

FIG. 2 is a schematic diagram of a screen wakeup method according to an embodiment of this application;

FIG. 3A and FIG. 3B are a flowchart of a screen wakeup method according to an embodiment of this application;

FIG. 4 is a schematic diagram of a screen wakeup apparatus according to an embodiment of this application;

FIG. 5 is a schematic diagram of a screen wakeup apparatus according to another embodiment of this application;

FIG. 6 is a schematic diagram of a screen wakeup apparatus according to another embodiment of this application; and

FIG. 7 is a schematic structural diagram of hardware of a chip according to an embodiment of this application.

## DESCRIPTION OF EMBODIMENTS

The following describes technical solutions of this application with reference to accompanying drawings.

A screen state control method provided in embodiments of this application can be applied to scenarios such as screen wakeup, gaze-based photographing, identification of reading content that a user is interested in, and human-computer interaction. Specifically, the screen state control method in the embodiments of this application can be applied to a scenario in a standby wakeup state. The scenario in the standby wakeup state is separately described below briefly.

Screen wakeup scenario

Before applications of a terminal device are used, the terminal device in a sleep/standby state needs to be woken up in advance, that is, a screen corresponding to the terminal device needs to be woken up (which may also be referred to as activated), so that a subsequent functional operation can be performed. The waking up the screen of the terminal device may be controlling a state of the screen to be switched from a screen-off state to a screen-on state, or may be considered as waking up the terminal device from the sleep state to an active state. This technology may be referred to as a standby wakeup technology.

It should be understood that the standby wakeup technology is different from an unlocking technology. The unlocking technology refers to some security authentication that needs to be performed after the terminal device is woken up, that is, after the terminal device is in the screen-on state, for example, password input, fingerprint input, iris authentication, or face authentication. The unlocking technology allows a user to get and use all functions of the terminal device. The standby wakeup technology is the first step for the user to use the terminal device, and is a preliminary technology of the terminal device.

Currently, for example, a common standby wakeup technology, that is, a screen wakeup method, may be key-pressing wakeup, double-tapping wakeup, lifting wakeup, voice wakeup, or the like. The key-pressing wakeup, the double-tapping wakeup, and the lifting wakeup need to be manually operated by the user, resulting in inconvenient and insecure use. The voice wakeup requires the user to make a voice for wakeup, also resulting in inconvenient use and a low wakeup rate. None of these wakeup manners includes security authentication, that is, there is no restriction that only an owner can control the screen to switch to the screen-on state. In this case, a non-owner can easily wake up the screen. Consequently, SMS message information on the screen is extremely likely to be disclosed, resulting in failure to effectively protect privacy information displayed on the screen for the owner.

In view of this, this application provides a screen wakeup method. A current image frame may be obtained, and gaze identification and owner identification may be completed based on a first face image in the current image frame, that is, whether a user corresponding to the first face image is gazing at a screen and further whether the user is an owner may be determined based on the first face image and a pre-trained deep neural network. When the first face image meets both the gaze identification and the owner identification, that is, the current image frame can meet a wakeup condition, a screen state of a device may be switched from a screen-off state to a screen-on state when M consecutive image frames meet the wakeup condition. According to the screen state control method in this application, the face image in the current image frame and the pre-trained deep neural network are obtained. This avoids a problem that accuracy of a wakeup result is severely affected by relatively low quality of a pupil image obtained by a general front-facing camera for gaze identification, thereby improving accuracy of screen state control.

In this application, the device may be a terminal device having a screen, for example, may be user equipment, a mobile device, a user terminal, a terminal, a wireless communications device, or a user apparatus. The terminal device may be a cellular phone, a cordless phone, a session initiation protocol (SIP) phone, a wireless local loop (WLL) station, a personal digital assistant (PDA), a handheld device having a wireless communication function, a computing device, another processing device connected to a wireless modem, a vehicle-mounted device, a wearable device, a terminal device in a future 5G network, or a terminal device in a future evolved public land mobile network (PLMN). This is not limited in the embodiments of this application.

The embodiments of this application relate to a large quantity of applications of neural networks. For ease of understanding, the following first describes related terms and concepts such as neural networks in the embodiments of this application.

(1) Rotation (face rotation)

A face image may be rotated from one pose angle to another pose angle by using any one of related methods such as image processing, machine learning, and computer graphics, to obtain a corresponding rotated image.

(2) Neural network

The neural network may include neurons. The neuron may be an operation unit that uses $x_s$ and an intercept b as inputs, and an output of the operation unit may be:

$$h_{W,b}(x) = f(W^T x) = f\left(\sum_{s=1}^{n} W_s x_s + b\right) \quad (1\text{-}1)$$

where s=1, 2, ..., n, n is a natural number greater than **1**, $W_s$ represents a weight of $x_s$, b represents a bias of the neuron, and f represents an activation function of the neuron, and is used to introduce a non-linear feature into the neural network to convert an input signal in the neuron into an output signal. The output signal of the activation function may be used as an input of a next convolutional layer. The activation function may be a sigmoid function. The neural network is a network formed by connecting a plurality of single neurons. That is, an output of one neuron may be an input of another neuron. An input of each neuron may be connected to a local receptive field of a previous layer, to extract a feature of the local receptive field. The local receptive field may be a region including several neurons.

(3) Deep neural network

The deep neural network (DNN) is also referred to as a multi-layer neural network, and may be understood as a neural network having many hidden layers. There is no special metric for "many" herein. The DNN is divided based on positions of different layers. A neural network in the DNN may be divided into three types: an input layer, a hidden layer, and an output layer. Generally, the first layer is an input layer, the last layer is an output layer, and a layer in the middle is a hidden layer. For example, in a fully connected neural network, layers are fully connected, that is, any neuron at an $i^{th}$ layer is definitely connected to any neuron at an $(i+1)^{th}$ layer. Although the DNN seems complex, work of each layer is actually not complex, which is simply shown in the following linear relationship expression: $\vec{y} = \alpha(W\vec{x} + \vec{b})$, where $\vec{x}$ represents an input vector, $\vec{y}$ represents an output vector, $\vec{b}$ represents a bias vector, $W$ represents a weight matrix (also referred to as a coefficient), and $\alpha()$ represents an activation function. Each layer simply performs such a simple operation on an input vector $\vec{x}$ to obtain an output vector $\vec{y}$. Because the DNN has many layers, there are also many coefficients $W$ and bias vectors $\vec{b}$. These parameters are defined in the DNN as follows: the coefficient W is used as an example. It is assumed that in a three-layer DNN, a linear coefficient from a fourth neuron at a second layer to a second neuron at a third layer is defined as $W_{24}^3$. The superscript 3 represents a number of a layer at which the coefficient W is located, and the subscript corresponds to an output index 2 of the third layer and an input index 4 of the second layer. It is concluded that, a coefficient from a $k^{th}$ neuron at an $(L-1)^{th}$ layer to a $j^{th}$ neuron at an $L^{th}$ layer is defined as $W_{jk}^L$. It should be noted that the input layer does not have the parameter $W$. In the deep neural network, more hidden layers enable the network to describe a more complex situation in the real world. Theoretically, a model with more parameters is more complex, and has a larger "capacity", which means that the model can complete a more complex learning task. A process of training the deep neural network is a process of learning a weight matrix, whose ultimate goal is to obtain a weight matrix for all layers of a trained deep neural network (a weight matrix including vectors W of many layers).

(4) Convolutional neural network

The convolutional neural network (CNN) is a deep neural network with a convolutional structure. The convolutional neural network includes a feature extractor including a convolutional layer and a sub-sampling layer. The feature extractor may be considered as a filter. A convolution process may be considered as performing convolution on an input image or a convolutional feature map by using a trainable filter. The convolutional layer is a neuron layer that is in the convolutional neural network and that performs convolution processing on an input signal. In the convolutional layer of the convolutional neural network, a neuron may be connected to only some neurons at an adjacent layer. One convolutional layer generally includes several feature maps. Each feature map may include some neurons arranged in a rectangle. Neurons in a same feature map share a weight. The shared weight herein is a convolution kernel. The shared weight may be understood as that a manner of extracting image information is unrelated to a position. An implied principle is that a part of an image has the same statistical information as another part. This means that image information learned from a part can be used for another part. Therefore, the same image information obtained through learning can be used for all positions on the image. At the same convolutional layer, a plurality of convolution kernels may be used to extract different image information. Generally, a larger quantity of convolution kernels indicates more abundant image information reflected by a convolution operation.

The convolution kernel may be initialized in a form of a matrix of a random size. In a process of training the convolutional neural network, the convolution kernel may obtain a proper weight through learning. In addition, a direct benefit brought by the shared weight is reducing connections between layers of the convolutional neural network, and reducing a risk of overfitting.

(5) Loss function

In a process of training a deep neural network, because it is expected that an output of the deep neural network is as close as possible to a value that is actually expected to be predicted, a predicted value of a current network and a target value that is actually expected may be compared, and then, a weight vector of each layer of neural network is updated based on a difference between the two (certainly, there is usually an initialization process before the first update, that is, a parameter is preconfigured for each layer in the deep neural network). For example, if the predicted value of the network is higher, the weight vector is adjusted to obtain a lower predicted value. The weight vector is continuously adjusted until the deep neural network can predict the target value that is actually expected or a value that is quite close to the target value that is actually expected. Therefore, "how to compare the predicted value with the target value to obtain the difference" needs to be predefined. This leads to a loss function or an objective function, which is an important equation used to measure the difference between the predicted value and the target value. The loss function is used as an example. A larger output value (loss) of the loss function indicates a larger difference. In this case, training of the deep neural network is changed to a process of reducing the loss as much as possible.

In this application, the pre-trained deep neural network may be a deep learning model, for example, may be a fully connected neural network, or may be a convolutional neural network (CNN). When all neurons at each layer are connected to all neurons at a next layer (a weight w of each neuron at each layer is not 0), the deep neural network may alternatively be a fully connected neural network model. When all neurons at each layer are not connected to all neurons at a next layer (weights w of some neurons at each layer are 0), the deep neural network may alternatively be a CNN model.

The following describes a method provided in this application from a model training side and a model application side.

A neural network training method provided in the embodiments of this application relates to computer vision processing, and may be specifically applied to data processing methods such as data training, machine learning, and deep learning, to perform symbolic and formal intelligent information modeling, extraction, preprocessing, training, and the like on training data, to finally obtain a trained neural network.

For example, a preconfigured neural network may be a gaze identification network, that is, whether a user corresponding to an obtained face image is gazing at a screen can be determined based on the face image and the pre-trained neural network. The preconfigured neural network may be applied to the screen wakeup method provided in the embodiments of this application, so that input data (for example, a first face image in this application) is input into the trained gaze identification network, to obtain output data (for example, a first probability in this application).

It should be noted that the preconfigured neural network training method and the screen wakeup method provided in the embodiments of this application may be based on a same concept, or may be understood as two parts in a system, or two phases of a complete process, for example, a model training phase and a model application phase. For example, the model training phase may be performed in advance, and the model application phase may be the screen wakeup method in this application, that is, an application of the pre-trained deep neural network.

First, a training process of the preconfigured neural network in this application is briefly described.

In the embodiments of this application, training data may include a feature image of a user, that is, an image that may reflect a current feature of the user, which, for example, may be a gaze image, a non-gaze image, head pose information, and gaze direction information of the user. A target model/rule may be obtained based on the training data, that is, the target model may be a pre-trained neural network, which is used to determine whether a user is gazing at a screen. In this application, the preconfigured neural network may be obtained through training based on a facial feature image of at least one user. The facial feature image of the at least one user may be a facial feature image of at least one user in a database collected and purchased in advance, or may be an image collected by using a front-facing camera after authorization by the user.

For example, the facial feature image of the at least one user may be a non-gaze face image, a gaze face image, head pose information, and gaze direction information of the at least one user. Because a face image can directly reflect a head pose, and a head pose of the user is usually closely related to a gaze direction, the head pose is generally consistent with gaze information. A user having a relatively large head rotation angle or pitch angle is usually not gazing at a screen, a user with a front face is usually gazing at a screen, and so on. To avoid some of real scenes in which a head pose is inconsistent with a gaze situation, abundant data sets are constructed for the neural network to purposefully learn gaze results in those special scenes, to improve identification accuracy of the neural network.

In the embodiments of this application, the target model/rule can be used to implement the screen wakeup method provided in the embodiments of this application, that is, a first face image in an obtained current image frame is preprocessed and then input to the target model/rule to obtain an output result, to determine whether a user corresponding to the first face image is gazing at a screen. The target model/rule in the embodiments of this application may be a preconfigured neural network.

In this application, the obtained target model/rule may be applied to different devices. For example, the obtained target model/rule may be applied to a terminal device, such as a mobile phone terminal, a tablet computer, a notebook computer, AR/VR, or a vehicle-mounted terminal.

For example, the preconfigured neural network in this application may be a convolutional neural network.

As described in the foregoing basic concept description, the convolutional neural network is a deep neural network with a convolutional structure, and is a deep learning architecture. The deep learning architecture means performing multi-level learning at different abstract levels by using a machine learning algorithm. As a deep learning architecture, the CNN is a feed-forward artificial neural network. Each neuron in the feed-forward artificial neural network may respond to an image input to the neural network.

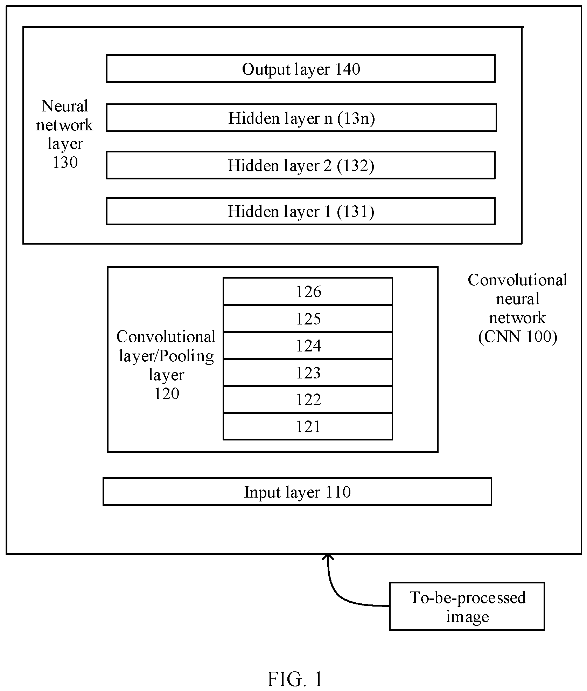

As shown in FIG. 1, a convolutional neural network (CNN) 100 may include an input layer 110, a convolutional layer/pooling layer 120 (the pooling layer is optional), and a neural network layer 130.

As shown in FIG. 1, the convolutional layer/pooling layer 120 may include, for example, layers 121 to 126. For example, in an implementation, the layer 121 is a convolutional layer, the layer 122 is a pooling layer, the layer 123 is a convolutional layer, the layer 124 is a pooling layer, the layer 125 is a convolutional layer, and the layer 126 is a pooling layer. In another implementation, the layers 121 and 122 are convolutional layers, the layer 123 is a pooling layer, the layers 124 and 125 are convolutional layers, and the layer 126 is a pooling layer. An output of a convolutional layer may be used as an input of a subsequent pooling layer, or may be used as an input of another convolutional layer to continue to perform a convolution operation.

The following describes an internal working principle of a convolutional layer by using the convolutional layer 121 as an example.

The convolutional layer 121 may include a plurality of convolution operators. The convolution operator is also referred to as a kernel, and a function of the convolution operator in image processing is equivalent to a filter for extracting particular information from an input image matrix. The convolution operator may be essentially a weight matrix, and the weight matrix is usually predefined. In a process of performing a convolution operation on an image, a weight matrix usually performs processing in a horizontal direction of one pixel after another pixel (or two pixels after two other pixels, which depends on a value of a stride) on an input image, to complete extraction of a particular feature from the image.

Weight values in these weight matrices need to be obtained through a large amount of training in actual application. Each weight matrix including weight values obtained through training may be used to extract information from an input image, so that the convolutional neural network 100 performs correct prediction.

When the convolutional neural network 100 has a plurality of convolutional layers, an initial convolutional layer (for example, 121) usually extracts a relatively large quantity of general features. The general features may also be referred to as low-level features. With deepening of the convolutional neural network 100, a later convolutional layer (for example, 126) extracts a more complex feature, for example, a high-level feature such as a semantic feature. A feature with a higher semantic meaning is more suitable for a to-be-resolved problem.

Pooling layer

Because a quantity of training parameters usually needs to be reduced, a pooling layer usually needs to be periodically introduced behind a convolutional layer. For the layers 121 to 126 shown in 120 in FIG. 1, one convolutional layer may be followed by one pooling layer, or a plurality of convolutional layers may be followed by one or more pooling layers. In an image processing process, a sole purpose of the pooling layer is to reduce a space size of an image. In addition, just as a size of a weight matrix in the convolutional layer should be related to a size of an image, the operator in the pooling layer should also be related to a size of an image. A size of an image output after processing performed by the pooling layer may be less than a size of an image input to the pooling layer. Each pixel in the image output by the pooling layer represents an average value or a maximum value of a corresponding sub-region of the image input to the pooling layer.

Neural network layer 130

After processing of the convolutional layer/pooling layer 120, the convolutional neural network 100 is still insufficient for outputting required output information. As described above, the convolutional layer/pooling layer 120 only extracts a feature and reduces parameters brought by an input image. However, to generate final output information (required information or other related information), the convolutional neural network 100 needs to use the neural network layer 130 to generate a quantity of outputs of one or a set of required classes. Therefore, the neural network layer 130 may include a plurality of hidden layers (131 and 132 to 13n shown in FIG. 1) and an output layer 140. Parameters included in the plurality of hidden layers may be obtained through pre-training based on related training data of a specific task type. For example, in this application, the task type may include image recognition, that is, it may be determined whether a first face image input into the neural network matches a preset face image, and whether a user corresponding to the first face image is gazing at a screen of a device.

For example, the preconfigured neural network in this application may alternatively be a fully connected neural network, that is, all neurons of each layer are connected to all neurons of a next layer (a weight w of each neuron of each layer is not 0).

It should be noted that the convolutional neural network 100 shown in FIG. 1 is merely used as an example of a convolutional neural network. In specific application, the convolutional neural network may alternatively exist in a form of another network model.

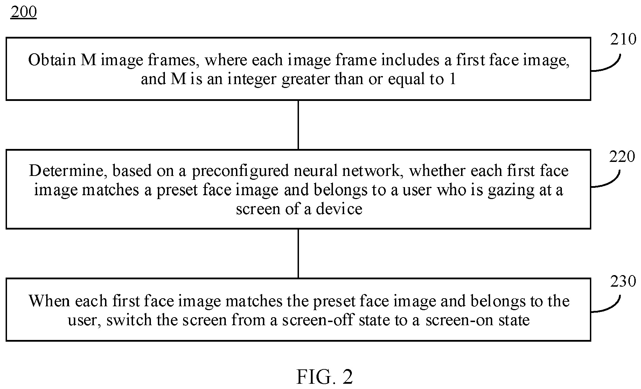

FIG. 2 shows a screen wakeup method 200 according to an embodiment of this application. The method 200 may include steps 210 to 230. The following describes steps 210 to 230 in detail.

Step 210: Obtain M image frames, where each image frame includes a first face image, and M is an integer greater than or equal to 1. In a possible implementation, before the M image frames are obtained, status information of a screen may be detected.

For example, whether the screen is currently in a screen-off state or a screen-on state may be detected. When the screen is in the screen-off state, the M image frames may be obtained. A face in the first face image may belong to a user, such as an owner or another person.

For example, a screen status may be periodically detected. Whether a current state of a device is the screen-off state is periodically detected by using a preset time period. If the current state of the screen is screen-off, a latest image frame in an image storage module may be obtained.

For example, the obtaining M image frames may be obtaining one current image frame at a time, and obtaining the M image frames at M times. Alternatively, a plurality of image frames may be obtained at a time.

It should be noted that, each obtained image frame may be an obtained latest image frame in a memory of the device, the latest image frame may be an image collected by a front-facing camera, and the latest image frame may be considered as an image frame whose image storage or image collection time has a shortest time difference from a current time. The obtaining M image frames may be obtaining a current image frame and M-1 image frames before the current image frame at a time. In other words, the M image frames may be obtained at a time.

In this application, step 210 may further include the following: After the M image frames are obtained, a first face box may be determined in each image frame. For example, the first face box is a face box with a largest area in at least one face box included in each image frame. The first face image may be determined based on a second face image located in the first face box.

It should be understood that an image frame collected by the front-facing camera may include one or more face images, and a quantity of face images included in the image frame is related to a quantity of users in front of the camera during image collection. Considering that the user usually intentionally gets close to the screen of the device to wake up the device, that is, a face image with a largest area in an image frame is most likely to be of a real user who wakes up the screen, in this application, each obtained image frame may include at least one face image, and the first face image may be a face image with a largest area in at least one face image included in the current image frame. It may be understood that the first face image may alternatively be another face image in the at least one face image included in the current image frame, for example, a face image located at or near a center of the current image frame.

In an example, the step of determining a first face box in each image frame may further include: obtaining face direction information, where the face direction information is used to indicate a direction of the second face image; and when the direction of the second face image does not match a preset standard direction, rotating the second face image, to obtain the first face image matching the preset standard direction.

For example, when the direction of the second face image matches the preset standard direction, the second face image may be used as the first face image.

For example, one image frame is used as an example for description. After the image frame is obtained, it may be determined whether there is a face image in the current image frame, that is, a face image and a background image in the current image frame are distinguished. When there is a face image in the current image frame, a face box and a face direction of at least one face image included in the current image frame may be determined. The face box may be a rectangular box, and a position of the face box, that is, coordinates of an upper left corner and a lower right corner of the rectangular face box, may be obtained. The face direction may be that the face image in the face box is upward, downward, leftward, rightward, or the like relative to the rectangular face box. For example, an area of at least one face box may be calculated based on coordinates of the face box, and a face box with a largest area, namely, a first face box, is selected based on area sorting. A first face box region may be positioned in the current image frame based on the first face box, and a face region image corresponding to the first face box is cropped, to obtain a second face image.

Further, to reduce computational workload and computational complexity of a preconfigured neural network, the first face image may be determined based on the first face box and the face direction information, where the first face image is a face image vertically upward relative to the screen. That is, after the second face image corresponding to the first face box is obtained, if the second face image does not match the preset standard direction, for example, the preset standard direction may be a vertically upward direction relative to the screen, the second face image may be rotated based on the face direction information, to correct the second face image to a face image vertically upward relative to the screen. If the second face image matches the preset standard direction, the second face image may be used as the first face image.

In this application, faces in images collected by the camera may have various directions. To reduce computational workload and computational complexity of the preconfigured neural network, that is, to meet an input constraint of a subsequent pre-trained deep neural network, the faces in various directions may be all corrected to vertical faces, which are face images vertically upward relative to the screen. In this embodiment, the vertically upward may be vertically upward relative to a ground plane.

Step 220: Determine, based on the preconfigured neural network, whether each first face image matches a preset face image and belongs to a user who is gazing at the screen of the device.

It should be understood that the preconfigured neural network in this application may be a deep neural network, and a preconfiguration process of the deep neural network may be shown in FIG. 1.

In this application, the preconfigured neural network may be obtained through training based on a facial feature image of at least one user. The facial feature image of the at least one user may be a facial feature image of at least one user in a database collected and purchased in advance, or may be an image collected by using a front-facing camera after authorization by the user.

For example, the facial feature image of the at least one user may be a non-gaze face image, a gaze face image, head pose information, and gaze direction information of the at least one user. Because a face image can directly reflect a head pose, and a head pose of the user is usually closely related to a gaze direction, the head pose is generally consistent with gaze information. A user having a relatively large head rotation angle or pitch angle is usually not gazing at a screen, a user with a front face is usually gazing at a screen, and so on. To avoid some of real scenes in which a head pose is inconsistent with a gaze situation, abundant data sets are constructed for the neural network to purposefully learn gaze results in those special scenes, to improve identification accuracy of the neural network.

In an example, whether each first face image belongs to the user who is gazing at the screen of the device may be determined by using the preconfigured neural network. When each first face image belongs to the user, whether each first face image matches the preset face image may be determined by using the preconfigured neural network.

In this application, gaze identification may be first performed, that is, it is determined whether a user corresponding to the first face image in the current image frame is gazing at the screen. When the gaze identification is met, owner identification is then performed, that is, it is determined whether the user corresponding to the first face image matches the preset face image. In the owner identification, a plurality of feature vectors in the image need to be compared, so that power consumption of the owner identification is higher than that of the gaze identification. Therefore, to reduce power consumption of a system, the gaze identification may be performed before the owner identification. Alternatively, the owner identification may be performed based on the first face image before the gaze identification. In an example, whether each first face image matches the preset face image may be determined by using the preconfigured neural network. When each first face image matches the preset face image, whether each first face image belongs to the user who is gazing at the screen of the device may be determined by using the preconfigured neural network.

Specifically, a probability value that each first face image belongs to the user who is gazing at the screen of the device may be determined by using the preconfigured neural network. When the probability value is greater than a preset threshold, it is determined that each first face image belongs to the user who is gazing at the screen of the device.

Specifically, each first face image may be input to the preconfigured neural network, so that a feature vector of the first face image is output, and a distance between the feature vector and a feature vector of the preset face image on the device is calculated, to determine whether the matching is met.

In an example, the preset face image may be a face image of an owner of the device. When the owner performs registration, the device may guide the owner in acquiring a face image of the owner, obtain a corresponding feature vector by executing the owner identification network, and store the feature vector at a fixed position (such as a memory) as a feature vector (face ID) of an owner face for use in owner identification. When it is determined whether a current face image matches the preset face image, a distance between a feature vector corresponding to the current face image and the feature vector of the owner face may be calculated, and compared with a preset distance threshold. If the distance is less than the preset distance threshold, it may be determined that the current face image matches the preset face image. If the distance is greater than the preset distance threshold, it may be determined that the current face image does not match the preset face image.

Step 230: When each first face image matches the preset face image and belongs to the user, switch the screen from the screen-off state to the screen-on state.

For example, one image frame is used as an example for description. A current image frame may be obtained. The current image frame includes a first face image. Whether the first face image matches the preset face image and belongs to the user who is gazing at the screen of the device is determined based on the preconfigured neural network. When the first face image matches the preset face image and belongs to the user, the screen is switched from the screen-off state to the screen-on state.

Further, after it is determined, based on the current image frame, that the owner is gazing at the screen, to avoid a problem that the screen of the device is switched from the screen-off state to the screen-on state after the user accidentally glances at the mobile phone, it may be further determined whether each first face image in M consecutive image frames matches the preset face image and belongs to the user who is gazing at the screen of the device. Generally, if the owner intentionally wakes up the device, the owner gazes for a specific time period. Therefore, to allow for rationality of a scene and real-time wakeup, when it is detected that each first face image in the M consecutive image frames matches the preset face image and belongs to the user who is gazing at the screen, the screen may be switched from the screen-off state to the screen-on state. A specific process of detecting that each first face image in the M consecutive image frames matches the preset face image and belongs to the user who is gazing at the screen may be performing processing and determining for each image frame sequentially, that is, may be obtaining a first image frame, when a first face image in the first image frame matches the preset face image and belongs to the user who is gazing at the screen, obtaining a second image frame to perform the same identification operation until obtaining an $M^{th}$ image frame, and when a first face image in the $M^{th}$ image frame also matches the preset face image and belongs to the user who is gazing at the screen, switching the screen of the device from the screen-off state to the screen-on state. Alternatively, the M consecutive image frames may be obtained, and all or some of the M image frames may be processed at the same time. When each first face image in the M image frames matches the preset face image and belongs to the user who is gazing at the screen, the screen is switched from the screen-off state to the screen-on state. The foregoing is example description, and does not limit an execution sequence of a process in this application.

It should be understood that, a value of M may be customized, and it should be ensured that the value of M should neither be excessively large nor excessively small. If the value of M is excessively large, a wakeup delay is relatively long and a wakeup rate is low. If the value of M is excessively small, severe wakeup jumps are caused.

According to the screen wakeup method provided in this application, gaze identification and face image identification are performed based on the preconfigured neural network by using the first face image of each of the M obtained image frames, that is, it is determined whether each first face image matches the preset face image and belongs to the user who is gazing at the screen of the device. This can avoid a problem that accuracy of a wakeup result is severely affected by relatively low quality of a pupil image obtained by a front-facing camera, thereby improving accuracy of screen wakeup of the device without significantly increasing device costs.

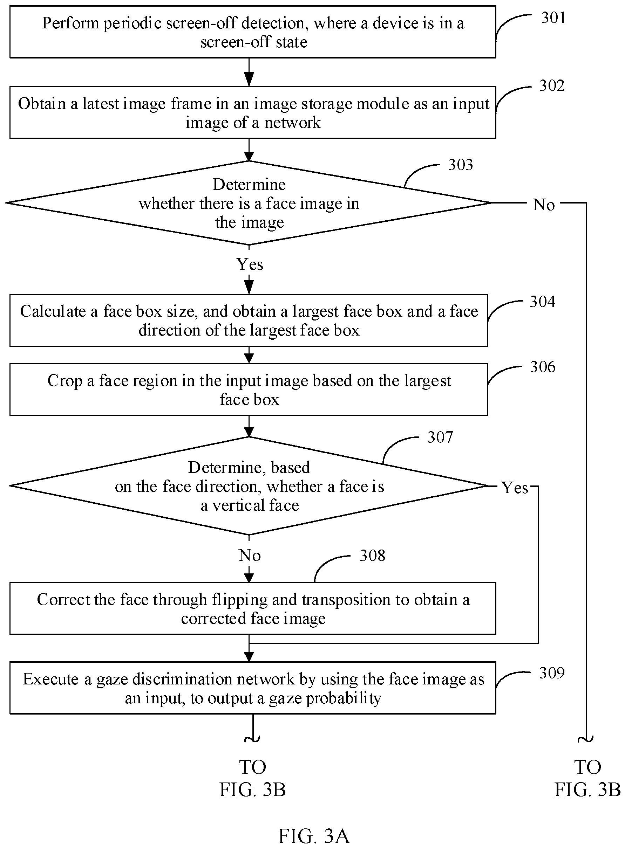

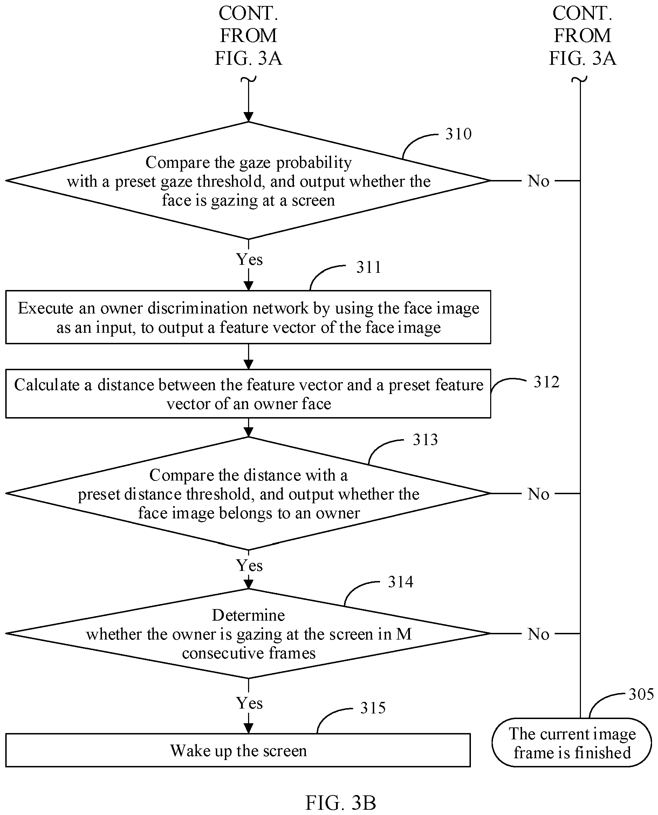

The following describes a specific process of screen wakeup in the embodiments of this application with reference to FIG. 3A and FIG. 3B.

FIG. 3A and FIG. 3B are a schematic flowchart of a screen wakeup method according to an embodiment of this application. The method shown in FIG. 3A and FIG. 3B includes step 301 to step 315. The following separately describes step 301 to step 315 in detail.

Step 301: A periodic screen-off detection module periodically detects, by using a specified period, whether a current state of a terminal device is a screen-off state.

For example, if the terminal device is in the screen-off state, that is, a screen of the terminal device is in the screen-off state, step 302 is performed.

For example, if the terminal device is in a screen-on state, that is, the screen of the terminal device is in the screen-on state, step 305 is performed: A current image frame is finished. That is, the module ends the process, and waits to continue the screen-off detection in a next period.

Step 302: Obtain a latest image frame in an image storage module as an input image for subsequent gaze identification or owner identification.

In this application, the latest image frame has a shortest time difference between a time at which the image frame is stored or the image frame is obtained and a current time.

Step 303: Determine whether there is a face image in the obtained latest image frame. If there is a face image, step 304 is performed. If there is no face image, step 305 is performed: The current image frame is finished, that is, the process ends.

Step 304: Calculate a face box size, and obtain a largest face box and a face direction of the largest face box.

For example, after the latest image frame is obtained, face detection may be performed on the image to determine a background region and a face region in the latest image frame.

In an example, an end-to-end multi-task network structure may be used to complete three tasks of face box positioning, face classification, and face direction classification. That is, an image of a fixed size may be input, to obtain face box coordinates and a face direction that are output. The face direction is relative position information of a face image in a face box relative to the face box. For example, the face direction may be upward, leftward, rightward, or downward. The face box coordinates may be coordinate values of an upper left corner and a lower right corner of a rectangular box, that is, may be four numerical values. An area of the face box is calculated, a face with a largest area is selected based on area sorting, and face box coordinates and a face direction of the face are output.

It should be understood that an image collected by a front-facing camera may include one or more face images. Considering that an owner usually intentionally gets close to the screen of the device to wake up the device, a largest face image in the image collected by the camera belongs to a user who is most likely to wake up the screen. Alternatively, another face image in at least one face image included in the current image frame, for example, a face image located at or near a center of the current image frame, belongs to a user who is most likely to wake up the screen. Step 306: Position the largest face box in the obtained latest image frame based on the face box, and crop a face region image in the face box.

Step 307: Determine, based on the face direction of the largest face box, whether the cropped face region image belongs to a vertical face, that is, whether the cropped face region image is a face image vertically upward relative to the screen. If the cropped face image is a vertical face image (a vertically upward face image), step 309 is performed. If the cropped face image is not a vertical face image, step 308 is performed.

Step 308: Correct the face image through flipping and transposition to obtain a corrected face image, that is, obtain a face image vertically upward relative to the screen of the terminal device.

In this application, faces in images collected by the camera may have various directions. To reduce load and computational complexity of subsequent gaze identification and owner identification networks, the cropped face region image may be corrected to a face image in a vertical direction.

For example, if the cropped face image is a face image in a vertically upward direction, the cropped face image may not be corrected. If the cropped face image is a face image in a downward direction, the cropped face image may be flipped upward. If the cropped face image is a face image in a leftward direction, the cropped face image may be first flipped upward and then transposed. If the cropped face image is a face image in a rightward direction, the cropped face image may be first flipped leftward and then transposed. Finally, a corrected face region image in the vertical direction may be output.

Step 309: Execute the gaze identification network by using the face image as an input, to output a gaze probability.

In this application, the gaze identification network may be a pre-trained deep neural network, and the obtained face image is input to the pre-trained deep neural network, to output a gaze or non-gaze probability.

It should be understood that the input of the gaze identification network may be a corrected face image in the vertical direction, or may be an input face image that is not corrected. Accuracy of a gaze result output by the network for the input being a corrected face image in the vertical direction is higher than that of the input being directly the face image. In addition, if it is considered that a correction process may cause power consumption of the device, the face correction process may be removed, and the original face image may be directly input to determine corresponding gaze accuracy. Even if the original face image that is not corrected to the vertical direction is directly input, gaze accuracy of the gaze identification network is higher than that of a conventional gaze identification method based on an obtained pupil image.

Step 310: Compare the output gaze probability with a preset gaze threshold, and output whether the face is gazing at the screen. If the gaze probability is greater than the preset gaze threshold, it is determined that the face is gazing at the screen, which indicates that the face is attempting to wake up the device, that is, it is determined that a user corresponding to the face input to the gaze identification network is gazing at the screen, and step 311 is performed. If the gaze probability is less than the preset gaze threshold, it is determined that the face is not gazing at the screen, which indicates that the face has no wakeup intention, that is, it is determined that the user corresponding to the face input to the gaze identification network is not gazing at the screen, and step 305 is performed: The current image frame is finished, that is, the process ends.

Step 311: Execute the owner identification network by using the face image as an input, to output a feature vector of the face image. It should be noted that in this application, the owner identification network and the gaze identification network may be two different end-to-end lightweight neural network algorithms.

Step 312: Calculate a distance between the output feature vector and a preset feature vector of an owner face.

Step 313: Compare the calculated distance with a preset distance threshold, and output whether the face image belongs to an owner.

In an example, a distance between a feature vector corresponding to a current face image and the feature vector of the owner face is calculated, and compared with the preset distance threshold. If the distance is less than a preset distance threshold, it is determined that the face image belongs to the owner face, and step 314 is performed. Otherwise, it is determined that the face image belongs to a non-owner face, and step 305 is performed: The current image frame is finished, that is, the process ends. When the owner performs registration, the terminal device may guide the owner in capturing an owner face, obtain a corresponding feature vector by executing the owner identification network, and store the feature vector at a fixed position as a feature vector of the owner face for use in owner identification.

It should be understood that gaze identification is performed first in FIG. 3A and FIG. 3B, that is, step 309 and step 310; and when the gaze probability is greater than the preset gaze threshold, the owner identification is performed, that is, step 311 to step 313. It may be understood that, in a process of performing the screen wakeup method shown in FIG. 3A and FIG. 3B, alternatively, the owner identification may be performed first, and when the owner identification meets a condition, that is, the input face image may match the face image of the owner, the gaze identification is performed. Alternatively, a neural network may be used to perform the owner identification and the gaze identification at a time, that is, results of the owner identification and the gaze identification are output at a time through processing of the neural network. The foregoing is example description, and does not limit an execution sequence of a process in this application.

Step 314: Determine whether the owner is gazing at the screen in M consecutive frames. That is, a quantity of consecutive frames in which it is determined that the owner is gazing at the screen is counted, and it is determined whether the quantity of consecutive frames reaches the preset M frames. If the quantity of consecutive frames reaches the M consecutive frames, step 315 is performed. Otherwise, step 305 is performed to exit the process.

Step 315: Wake up the screen, that is, adjust the screen state to the screen-on state.

It should be noted that the example in FIG. 3A and FIG. 3B are merely intended to help a person skilled in the art understand the embodiments of this application, but is not intended to limit the embodiments of this application to the specific scenario illustrated. A person skilled in the art can apparently make various equivalent modifications or changes according to the examples shown in FIG. 3A and FIG. 3B, and such modifications or changes also fall within the scope of the embodiments of this application.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

The screen wakeup method according to the embodiments of this application is described in detail above. In this application, gaze identification and face image identification are performed based on the preconfigured neural network by using the M obtained image frames, that is, it is determined whether the first face image in each image frame matches the preset face image and belongs to the user who is gazing at the screen of the device, so that accuracy of screen wakeup of the device can be improved without significantly increasing device costs. It should be understood that a screen wakeup apparatus in the embodiments of this application may perform various methods in the foregoing embodiments of this application. That is, for specific working processes of the following products, refer to corresponding processes in the foregoing method embodiments.

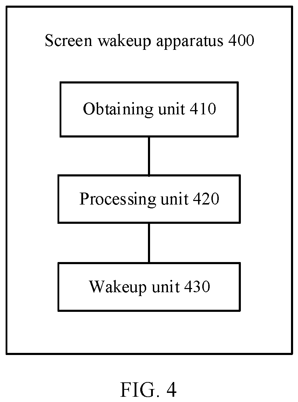

FIG. 4 is a schematic block diagram of a screen wakeup apparatus 400 according to an embodiment of this application. It should be understood that the apparatus 400 can perform steps in the method in FIG. 2 or FIG. 3A and FIG. 3B. To avoid repetition, details are not described herein again. The apparatus 400 includes an obtaining unit 410, a processing unit 420, and a wakeup unit 430. The obtaining unit 410 is configured to obtain M image frames, where each of the M image frames includes a first face image, and M is an integer greater than or equal to 1. The processing unit 420 is configured to determine, based on a preconfigured neural network, whether each first face image matches a preset face image and belongs to a user who is gazing at a screen of a device. The wakeup unit 430 is configured to: when each first face image matches the preset face image and belongs to the user, switch the screen from a screen-off state to a screen-on state.

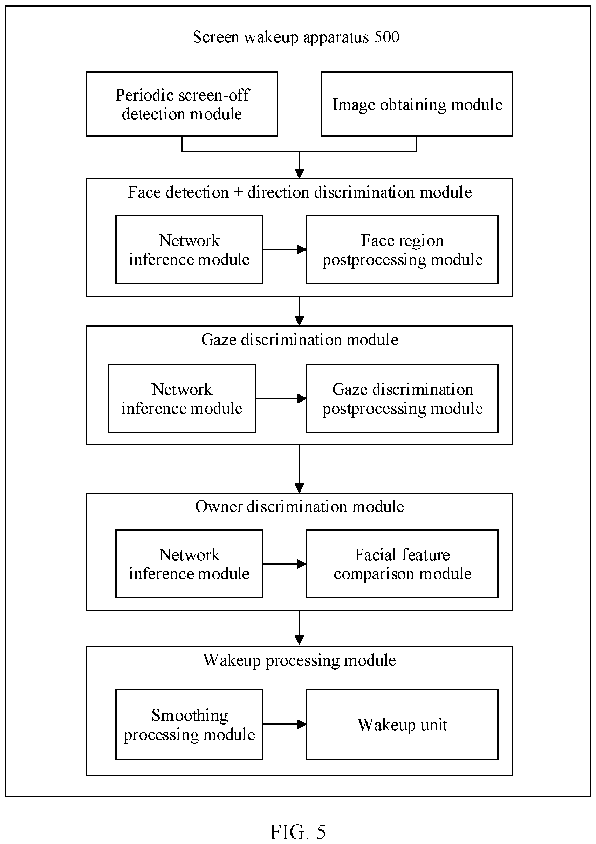

In an example, a specific implementation form of the obtaining unit 410 in FIG. 4 may be specifically an image obtaining module shown in FIG. 5. The image obtaining module is configured to obtain a latest image frame in an image storage module as an input image of a subsequent network.

In an example, a specific implementation form of the processing unit 420 in FIG. 4 may include a periodic screen-off detection module, a face detection + direction identification module, a gaze identification module, and an owner identification module shown in FIG. 5. The periodic detection module may be configured to periodically detect, by using a specified period, whether a current state of the device is the screen-off state. If the current state is the screen-off state, a next process is performed; otherwise, the process is skipped to continue screen-off detection in a next period. The face detection + direction identification module may be configured to: run a multi-task neural network algorithm of face detection + direction identification, where the latest stored image of the image storage module is obtained as an input image of the network, and the algorithm directly outputs face box coordinates and face direction information in the image; obtain a largest face box and face direction information of the largest face box based on an area of a face box, crop a largest face region from the input image, perform vertical direction correction based on the face direction, and output a corrected face region image as an input of a subsequent module. The gaze identification module may be configured to: run a neural network algorithm of gaze identification, where the output image (face region image) of the face detection + direction identification module is used as an input, and the algorithm directly outputs a gaze probability; compare the gaze probability with a preset probability threshold, and output a gaze result. The owner identification module may be configured to: run a neural network algorithm of the owner identification module, where the output image (face region image) of the face detection + direction identification module is used as an input, and the algorithm directly outputs a facial feature vector; calculate a distance between the facial feature vector and a prestored facial feature vector of an owner, determine, based on a preset distance threshold, whether a user is the owner, and output a result.

In an example, a specific implementation form of the wakeup unit 430 in FIG. 4 may be a wakeup processing module shown in FIG. 5. The wakeup processing module may be configured to determine, based on gaze information and owner information that are obtained by the foregoing modules, whether the owner is currently gazing at the screen in M consecutive image frames. If the owner is currently gazing at the screen in M consecutive image frames, a report is sent to a related wakeup unit to wake up the screen. If the owner is currently not gazing at the screen in M consecutive image frames, no reporting is performed.

Optionally, in an embodiment, the processing unit 420 is specifically configured to: determine, by using the preconfigured neural network, whether each first face image belongs to the user; and when each first face image belongs to the user, determine, by using the preconfigured neural network, whether each first face image matches the preset face image.

Optionally, in an embodiment, the processing unit 420 is specifically configured to: determine, by using the preconfigured neural network, a probability value that each first face image belongs to the user; and when the probability value is greater than a preset threshold, determine that each first face image belongs to the user. Optionally, in an embodiment, the processing unit 420 is further configured to: determine a first face box in each image frame, where the first face box is a face box with a largest area in at least one face box included in each image frame; and determine the first face image based on a second face image located in the first face box.

Optionally, in an embodiment, the obtaining unit 410 is further configured to: obtain face direction information, where the face direction information is used to indicate a direction of the second face image; and the processing unit 420 is specifically configured to: when the direction of the second face image does not match a preset standard direction, rotate the second face image, to obtain the first face image matching the preset standard direction.

Optionally, in an embodiment, the obtaining unit 410 is specifically configured to: obtain the M image frames when the screen is in the screen-off state.

Optionally, in an embodiment, the preconfigured neural network is a deep neural network.

It should be understood that the screen wakeup apparatus 400 herein is embodied in a form of functional units. The term "unit" herein may be implemented in a form of software and/or hardware, which is not specifically limited. For example, the "unit" may be a software program, a hardware circuit, or a combination thereof that implements the foregoing function. The hardware circuit may include an application-specific integrated circuit (ASIC), an electronic circuit, a processor (for example, a shared processor, a dedicated processor, or a packet processor) for executing one or more software or firmware programs, a memory, a combinational logic circuit, and/or another appropriate component that supports the described function. Therefore, units in the examples described in the embodiments disclosed in this application may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

An embodiment of this application further provides a device. The device may be a terminal device, or may be a circuit device built into the terminal device. The device may be configured to perform functions/steps in the foregoing method embodiment.

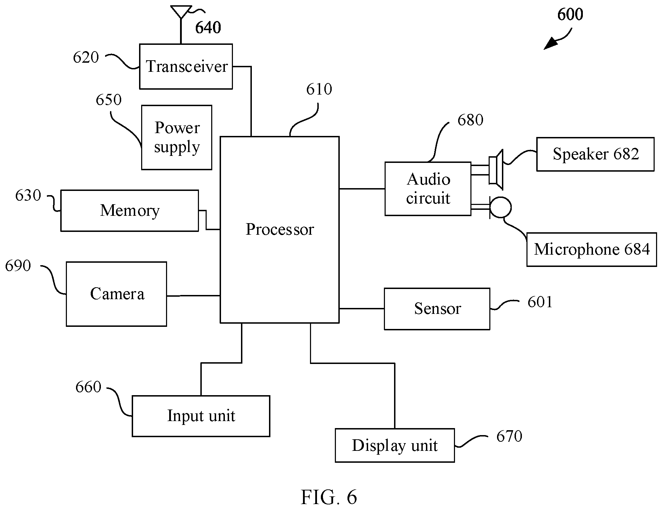

As shown in FIG. 6, the device 600 includes a processor 610 and a transceiver 620. Optionally, the device 600 may further include a memory 630. The processor 610, the transceiver 620, and the memory 630 may communicate with each other by using an internal connection path to transfer a control signal and/or a data signal. The memory 630 is configured to store a computer program. The processor 610 is configured to invoke the computer program from the memory 630 and run the computer program. Optionally, the device 600 may further include an antenna 640, configured to send a radio signal output by the transceiver 620.

The processor 610 and the memory 630 may be combined into a processing apparatus, but more commonly, they are components independent of each other. The processor 610 is configured to execute program code stored in the memory 630 to implement the foregoing functions. During specific implementation, the memory 630 may be integrated into the processor 610, or may be independent of the processor 610. The processor 610 may correspond to the processing unit 420 in the apparatus 400 in FIG. 4, or may correspond to the periodic detection module, the face detection + direction identification module, the gaze identification module, and the owner identification module in the apparatus 500 in FIG. 5.

In addition, to improve functionality of the device 600, the device 600 may further include one or more of an input unit 660, a display unit 670, an audio circuit 680, a camera 690, a sensor 601, and the like. The audio circuit may further include a speaker 682, a microphone 684, and the like. The camera 690 may correspond to the obtaining unit 410 in the apparatus 400 in FIG. 4, or may correspond to the image obtaining module in the apparatus 500 in FIG. 5. The display unit 670 may include a screen, and the display unit 670 may correspond to the wakeup unit 430 in the apparatus 400 in FIG. 4, or may correspond to the wakeup processing module in the apparatus 500 shown in FIG. 5. For example, in an implementation, the camera 690 or an image processing channel corresponding to the camera 690 may be configured to obtain M image frames.

Optionally, the device 600 may further include a power supply 650, configured to supply power to components or circuits in the terminal device.

It should be understood that the device 600 shown in FIG. 6 can implement processes of the method embodiments shown in FIG. 2 and FIG. 3A and FIG. 3B. Operations and/or functions of modules in the device 600 are respectively intended to implement corresponding processes in the foregoing method embodiments. For details, refer to the descriptions in the foregoing method embodiments. To avoid repetition, detailed descriptions are appropriately omitted herein.

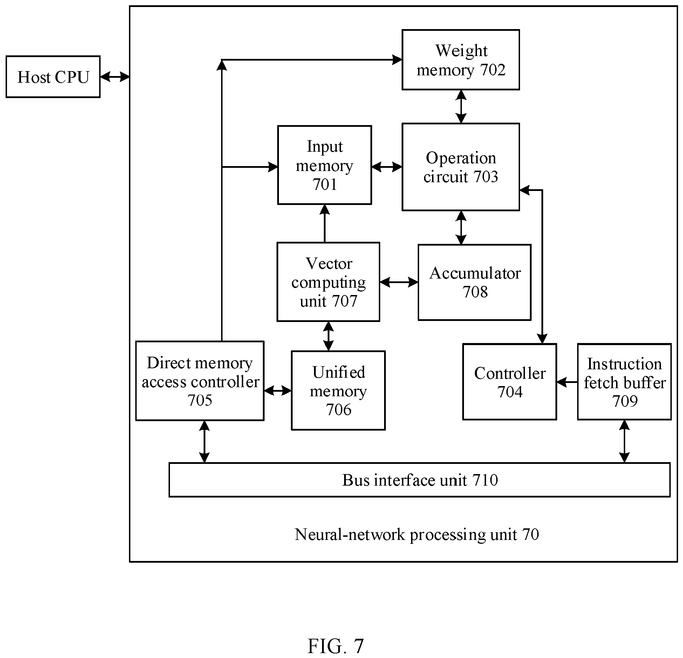

FIG. 7 shows a hardware structure of a chip according to an embodiment of this application. The chip includes a neural-network processing unit 70. The chip may be disposed in the device 600 shown in FIG. 6, for example, may be disposed in the processor 610 of the device 600. Algorithms of all the layers in the convolutional neural network shown in FIG. 1 may be implemented in the chip shown in FIG. 7.

It should be understood that the processor 610 in the device 600 shown in FIG. 6 may be a system on a chip (SOC), and the processor 610 may include a central processing unit (CPU) and a neural-network processing unit (NPU) 70 shown in FIG. 7, and may further include other types of processors, such as an image signal processor (ISP) corresponding to the camera 690. The ISP may include the image processing channel mentioned in the foregoing embodiment. The CPU may be referred to as a host CPU. The neural-network processing unit NPU 70 is mounted to the host CPU as a coprocessor, and assigned a task by the host CPU. The processors work cooperatively to implement the foregoing method processes, and each processor may selectively execute a part of a software driver.

For example, step 210 in FIG. 2 may be performed by the ISP, step 220 may be performed by the NPU 70, and step 230 may be performed by the CPU. For another example, steps 301, 314, and 315 in FIG. 3A and FIG. 3B are performed by the CPU, step 302 is performed by the ISP, and steps 303 to 313 may be performed by the NPU. Alternatively, step 303 may be performed by the CPU rather than the NPU. In conclusion, the processors or processing units in the processor 610 may cooperate to implement the foregoing method processes, and software programs corresponding to the processors or processing units may be stored in the memory 630. The NPU 70 is merely used as an example. An actual neural network function may be performed by a processing device other than the NPU 70. For example, a graphics processing unit (GPU) may also be used for neural network processing. This is not limited in this embodiment.

Using FIG. 7 as an example, a core part of the NPU is an operation circuit 703, and a controller 704 controls the operation circuit 703 to extract data in a weight memory 702 or an input memory 701 and perform an operation.

In some possible implementations, the operation circuit 703 internally includes a plurality of processing engines (PE). In some implementations, the operation circuit 703 is a two-dimensional array. Alternatively, the operation circuit 703 may be a one-dimensional array or another electronic circuit that can perform mathematical operations such as multiplication and addition.

In some implementations, the operation circuit 703 is a general-purpose matrix processor.

For example, it is assumed that there is an input matrix A, a weight matrix B, and an output matrix C. The operation circuit obtains data corresponding to the matrix B from the weight memory 702, and buffers the data in each PE in the operation circuit. The operation circuit obtains data of the matrix A from the input memory 701, performs a matrix operation on the matrix A and the matrix B, and stores an obtained partial result or final result of the matrices in an accumulator 708.

A vector computing unit 707 may perform further processing, for example, vector multiplication, vector addition, an exponential operation, a logarithmic operation, or value comparison, on an output of the operation circuit. For example, the vector computing unit 707 may be configured to perform network computing, for example, pooling, batch normalization, or local response normalization (LRN), of a non-convolution/non-FC layer in a neural network.

In some implementations, the vector computing unit 707 can store a processed output vector in a unified buffer 706. For example, the vector computing unit 707 may apply a non-linear function to the output, for example, a vector of an accumulated value, of the operation circuit 703 to generate an activation value. In some implementations, the vector computing unit 707 generates a normalized value, a combined value, or both. In some implementations, the processed output vector can be used as an activation input to the operation circuit 703, for example, used in a subsequent layer in the neural network.

The unified memory 706 is configured to store input data and output data.

For weight data, a direct memory access controller (DMAC) 705 directly transfers input data in an external memory to the input memory 701 and/or the unified memory 706, stores, in the weight memory 702, weight data in the external memory, and stores, in the external memory, data in the unified memory 706.

A bus interface unit (BIU) 710 is configured to implement interaction between the host CPU, the DMAC, and an instruction fetch buffer 709 by using a bus. The instruction fetch buffer 709 connected to the controller 704 is configured to store an instruction to be used by the controller 704. The controller 704 is configured to invoke the instruction buffered in the instruction fetch buffer 709, to control a working process of the operation accelerator. An operation of each layer in the convolutional neural network shown in FIG. 1 may be performed by the operation circuit 703 or the vector computing unit 707.

For example, in this embodiment of this application, according to a provided neural network training method, training may be performed based on a feature image of at least one user, to determine a pre-trained deep neural network. For example, training may be performed based on a non-gaze face image, a gaze face image, head pose information, and gaze direction information of the at least one user, to determine the pre-trained deep neural network.

Optionally, the training method may be processed by the CPU, or may be processed jointly by the CPU and the GPU, or may not be processed by the GPU, but another processor suitable for neural network computing is used. This is not limited in this application.

This application further provides a computer-readable storage medium. The computer-readable storage medium stores instructions. When the instructions are run on a computer, the computer is enabled to perform steps in the screen wakeup method shown in FIG. 2 and FIG. 3A and FIG. 3B.

This application further provides a computer program product including instructions. When the computer program product runs on a computer or at least one processor, the computer is enabled to perform steps in the screen wakeup method shown in FIG. 2 and FIG. 3A and FIG. 3B.

This application further provides a chip, including a processor. The processor is configured to read a computer program stored in a memory and run the computer program, to perform a corresponding operation and/or process of the screen wakeup method provided in this application.

Optionally, the chip further includes the memory. The memory and the processor are connected by using a circuit or a wire, and the processor is configured to read a computer program in the memory and execute the computer program. Further, optionally, the chip further includes a communications interface, and the processor is connected to the communications interface. The communications interface is configured to receive data and/or information that needs to be processed. The processor obtains the data and/or information from the communications interface, and processes the data and/or information. The communications interface may be an input/output interface.

In the foregoing embodiments, the related processor 610 may include, for example, a central processing unit (CPU), a microprocessor, a microcontroller, or a digital signal processor, and may further include a GPU, an NPU, and an ISP.

The processor may further include a necessary hardware accelerator or a logic processing hardware circuit, for example, an application-specific integrated circuit (ASIC), or one or more integrated circuits configured to control program execution of the technical solutions of this application. In addition, the processor may have a function of operating one or more software programs, and the software programs may be stored in a memory.

The memory may be a read-only memory (ROM) or another type of static storage device capable of storing static information and instructions, or a random access memory (RAM) or another type of dynamic storage device capable of storing information and instructions, or may be an electrically erasable programmable read-only memory (EEPROM), a compact disc read-only memory (CD-ROM) or another compact disc storage, an optical disc storage (including a compact disc, a laser disc, an optical disc, a digital versatile disc, a Blu-ray disc, or the like), a magnetic disk storage medium, or another magnetic storage device, or may be any other medium that can be used to carry or store expected program code in an instruction or data structure form and can be accessed by a computer, or the like.

In the embodiments of this application, "at least one" refers to one or more, and "a plurality of" refers to two or more. The term "and/or" describes an association relationship for describing associated objects and represents that three relationships may exist. For example, A and/or B may represent the following three cases: Only A exists, both A and B exist, and only B exists. A and B may be singular or plural. The character "/" generally indicates an "or" relationship between the associated objects. The expression "at least one of the following items" and a similar expression refer to any combination of these items, including a single item or any combination of a plurality of items. For example, at least one of a, b, and c may represent a, b, c, a-b, a-c, b-c, or a-b-c, where a, b, and c may be singular or plural.

A person of ordinary skill in the art may be aware that units and algorithm steps described in the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, when any function is implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

**Claims**

1. A screen wakeup method (200), comprising:

   obtaining (210) M image frames, wherein each image frame comprises a first face image, and M is an integer greater than or equal to 1;
   determining (220), based on a preconfigured neural network, whether a user corresponding to each first face image is gazing at a screen of a device, and whether each first face image matches a preset face image; and
   when each first face image matches the preset face image and corresponds to the user, switching (230) the screen from a screen-off state to a screen-on state;
   wherein the determining (220), based on a preconfigured neural network, whether a user corresponding to each first face image is gazing at a screen of a device, and whether each first face image matches a preset face image comprises:

      determining, by using the preconfigured neural network, whether each first face image corresponds to the user gazing at the screen of the device; and
      when each first face image corresponds to the user gazing at the screen of the device, determining, by using the preconfigured neural network, whether each first face image matches the preset face image.

2. The method according to claim 1, wherein the determining, by using the preconfigured neural network, whether each first face image corresponds to the user comprises:

      determining, by using the preconfigured neural network, a probability value that each first face image corresponds to the user; and
      when the probability value is greater than a preset threshold, determining that each first face image corresponds to the user.

3. The method according to any one of claims 1 to 2, wherein after the obtaining (210) M image frames, the method further comprises:

      determining a first face box in each image frame, wherein the first face box is a face box with a largest area in at least one face box comprised in each image frame; and
      determining the first face image based on a second face image located in the first face box.

4. The method according to claim 3, further comprising:

      obtaining face direction information, wherein the face direction information is used to indicate a direction of the second face image; and

the determining the first face image based on a second face image located in the first face box comprises:

when the direction of the second face image does not match a preset standard direction, rotating the second face image, to obtain the first face image matching the preset standard direction.

5. The method according to any one of claims 1 to 4, wherein the obtaining (210) M image frames comprises:

obtaining the M image frames when the screen is in the screen-off state.

6. The method according to any one of claims 1 to 5, wherein the preconfigured neural network is a deep neural network.

7. A screen wakeup apparatus (400), comprising:

an obtaining unit (410), configured to obtain M image frames, wherein each image frame comprises a first face image, and M is an integer greater than or equal to 1;

a processing unit (420), configured to determine, based on a preconfigured neural network, whether a user corresponding to each first face image is gazing at a screen of a device, and whether each first face image matches a preset face image; and

a wakeup unit (430), configured to: when each first face image matches the preset face image and corresponds to the user, switch the screen from a screen-off state to a screen-on state;

wherein the processing unit (420) is specifically configured to:

determine, by using the preconfigured neural network, whether each first face image corresponds to the user gazing at the screen of the device; and

when each first face image corresponds to the user gazing at the screen of the device, determine, by using the preconfigured neural network, whether each first face image matches the preset face image.

8. The apparatus (400) according to claim 7, wherein the processing unit (420) is specifically configured to:

determine, by using the preconfigured neural network, a probability value that each first face image corresponds to the user; and

when the probability value is greater than a preset threshold, determine that each first face image corresponds to the user.

9. The apparatus (400) according to any one of claims 7 to 8, wherein the processing unit (420) is further configured to:

determine a first face box in each image frame, wherein the first face box is a face box with a largest area in at least one face box comprised in each image frame; and

determine the first face image based on a second face image located in the first face box.

10. The apparatus (400) according to claim 9, wherein the obtaining unit (410) is further configured to:

obtain face direction information, wherein the face direction information is used to indicate a direction of the second face image; and

the processing unit (420) is specifically configured to:

when the direction of the second face image does not match a preset standard direction, rotate the second face image, to obtain the first face image matching the preset standard direction.

11. The apparatus (400) according to any one of claims 7 to 10, wherein the obtaining unit (410) is specifically configured to:

obtain the M image frames when the screen is in the screen-off state.

12. The apparatus (400) according to any one of claims 7 to 11, wherein the preconfigured neural network is a deep neural network.

13. A computer-readable storage medium, comprising a computer program, wherein when the computer program is run on a computer device or a processor, the computer device or the processor is enabled to perform the method according to any one of claims 1 to 6.

**Patentansprüche**

1. Verfahren (200) zum Aufwecken eines Bildschirms, umfassend:

Erlangen (210) von M Bildrahmen, wobei jeder Bildrahmen ein erstes Gesichtsbild umfasst und M eine Ganzzahl größer oder gleich 1 ist;

Bestimmen (220), basierend auf einem vorkonfigurierten neuronalen Netz, ob ein Benutzer, der jedem ersten Gesichtsbild entspricht, auf einen Bildschirm eines Geräts blickt und ob jedes erste Gesichtsbild mit einem voreingestellten Gesichtsbild übereinstimmt; und wenn jedes erste Gesichtsbild mit dem voreingestellten Gesichtsbild übereinstimmt und dem Benutzer entspricht, Umschalten (230) des Bildschirms von einem Bildschirm-Aus-Zustand in einen Bildschirm-Ein-Zustand;

wobei das Bestimmen (220), basierend auf einem vorkonfigurierten neuronalen Netz, ob ein Benutzer, der jedem ersten Gesichtsbild entspricht, auf einen Bildschirm eines Geräts blickt und ob jedes erste Gesichtsbild mit einem voreingestellten Gesichtsbild übereinstimmt, Folgendes umfasst:

> Bestimmen, unter Verwendung des vorkonfigurierten neuronalen Netzes, ob jedes erste Gesichtsbild dem Benutzer entspricht, der auf den Bildschirm des Geräts blickt; und
> wenn jedes erste Gesichtsbild dem Benutzer entspricht, der auf den Bildschirm des Geräts blickt, Bestimmen, unter Verwendung des vorkonfigurierten neuronalen Netzes, ob jedes erste Gesichtsbild mit dem voreingestellten Gesichtsbild übereinstimmt.

2. Verfahren nach Anspruch 1, wobei das Bestimmen, unter Verwendung des vorkonfigurierten neuronalen Netzes, ob jedes erste Gesichtsbild dem Benutzer entspricht, Folgendes umfasst:

> Bestimmen, unter Verwendung des vorkonfigurierten neuronalen Netzes, eines Wahrscheinlichkeitswerts, dass jedes erste Gesichtsbild dem Benutzer entspricht; und
> wenn der Wahrscheinlichkeitswert größer als ein voreingestellter Schwellenwert ist, Bestimmen, dass jedes erste Gesichtsbild dem Benutzer entspricht.

3. Verfahren nach einem der Ansprüche 1 bis 2, wobei das Verfahren nach dem Erlangen (210) von M Bildrahmen ferner Folgendes umfasst:

> Bestimmen eines ersten Gesichtskastens in jedem Bildrahmen, wobei der erste Gesichtskasten ein Gesichtskasten mit einer größten Fläche in mindestens einem Gesichtskasten ist, der in jedem Gesichtsrahmen umfasst ist; und
> Bestimmen des ersten Gesichtsbilds basierend auf einem zweiten Gesichtsbild, das sich in dem ersten Gesichtskasten befindet.

4. Verfahren nach Anspruch 3, ferner umfassend:

> Erlangen von Gesichtsrichtungsinformationen, wobei die Gesichtsrichtungsinformationen dazu verwendet werden, eine Richtung des zweiten Gesichtsbilds anzugeben; und

das Bestimmen des ersten Gesichtsbilds basierend auf einem zweiten Gesichtsbild, das sich in dem ersten Gesichtskasten befindet, Folgendes umfasst:

wenn die Richtung des zweiten Gesichtsbilds nicht mit einer voreingestellten Standardrichtung übereinstimmt, Drehen des zweiten Gesichtsbilds, um das erste Gesichtsbild zu erlangen, das mit der voreingestellten Standardrichtung übereinstimmt.

5. Verfahren nach einem der Ansprüche 1 bis 4, wobei das Erlangen (210) von M Bildrahmen Folgendes umfasst:
Erlangen der M Bildrahmen, wenn sich der Bildschirm in dem Bildschirm-Aus-Zustand befindet.

6. Verfahren nach einem der Ansprüche 1 bis 5, wobei das vorkonfigurierte neuronale Netz ein tiefes neuronales Netz ist.

7. Vorrichtung (400) zum Aufwecken eines Bildschirms, umfassend:

> eine Erlangungseinheit (410), die dazu konfiguriert ist, M Bildrahmen zu erlangen, wobei jeder Bildrahmen ein erstes Gesichtsbild umfasst und M eine Ganzzahl größer oder gleich 1 ist;
> eine Verarbeitungseinheit (420), die dazu konfiguriert ist, basierend auf einem vorkonfigurierten neuronalen Netz zu bestimmen, ob ein Benutzer, der jedem ersten Gesichtsbild entspricht, auf einen Bildschirm eines Geräts blickt und ob jedes erste Gesichtsbild mit einem voreingestellten Gesichtsbild übereinstimmt; und
> eine Aufweckeinheit (430), die zu Folgendem konfiguriert ist: wenn jedes erste Gesichtsbild mit dem voreingestellten Gesichtsbild übereinstimmt und dem Benutzer entspricht, Umschalten des Bildschirms von einem Bildschirm-Aus-Zustand in einen Bildschirm-Ein-Zustand;
> wobei die Verarbeitungseinheit (420) speziell zu Folgendem konfiguriert ist:

>> Bestimmen, unter Verwendung des vorkonfigurierten neuronalen Netzes, ob jedes erste Gesichtsbild dem Benutzer entspricht, der auf den Bildschirm des Geräts blickt; und
>> wenn jedes erste Gesichtsbild dem Benutzer entspricht, der auf den Bildschirm des Geräts blickt, Bestimmen, unter Verwendung des vorkonfigurierten neuronalen Netzes, ob jedes erste Gesichtsbild mit dem voreingestellten Gesichtsbild übereinstimmt.

**8.** Vorrichtung (400) nach Anspruch 7, wobei die Verarbeitungseinheit (420) speziell zu Folgendem konfiguriert ist:

Bestimmen, unter Verwendung des vorkonfigurierten neuronalen Netzes, eines Wahrscheinlichkeitswerts, dass jedes erste Gesichtsbild dem Benutzer entspricht; und
wenn der Wahrscheinlichkeitswert größer als ein voreingestellter Schwellenwert ist, Bestimmen, dass jedes erste Gesichtsbild dem Benutzer entspricht.

**9.** Vorrichtung (400) nach einem der Ansprüche 7 bis 8, wobei die Verarbeitungseinheit (420) ferner zu Folgendem konfiguriert ist:

Bestimmen eines ersten Gesichtskastens in jedem Bildrahmen, wobei der erste Gesichtskasten ein Gesichtskasten mit einer größten Fläche in mindestens einem Gesichtskasten ist, der in jedem Gesichtsrahmen umfasst ist; und
Bestimmen des ersten Gesichtsbilds basierend auf einem zweiten Gesichtsbild, das sich in dem ersten Gesichtskasten befindet.

**10.** Vorrichtung (400) nach Anspruch 9, wobei die Erlangungseinheit (410) ferner zu Folgendem konfiguriert ist:

Erlangen von Gesichtsrichtungsinformationen, wobei die Gesichtsrichtungsinformationen dazu verwendet werden, eine Richtung des zweiten Gesichtsbilds anzugeben; und
wobei die Verarbeitungseinheit (420) speziell zu Folgendem konfiguriert ist:
wenn die Richtung des zweiten Gesichtsbilds nicht mit einer voreingestellten Standardrichtung übereinstimmt, Drehen des zweiten Gesichtsbilds, um das erste Gesichtsbild zu erlangen, das mit der voreingestellten Standardrichtung übereinstimmt.

**11.** Vorrichtung (400) nach einem der Ansprüche 7 bis 10, wobei die Erlangungseinheit (410) speziell zu Folgendem konfiguriert ist:
Erlangen der M Bildrahmen, wenn sich der Bildschirm in dem Bildschirm-Aus-Zustand befindet.

**12.** Vorrichtung (400) nach einem der Ansprüche 7 bis 11, wobei das vorkonfigurierte neuronale Netz ein tiefes neuronales Netz ist.

**13.** Computerlesbares Speichermedium, umfassend ein Computerprogramm, wobei, wenn das Computerprogramm auf einem Computergerät oder einem Prozessor ausgeführt wird, es dem Computergerät oder dem Prozessor ermöglicht wird, das Verfahren nach einem der Ansprüche 1 bis 6 durchzuführen.

**Revendications**

**1.** Procédé de réveil d'écran (200), comprenant :

l'obtention (210) de M trames d'image, dans lequel chaque trame d'image comprend une première image de visage, et M est un entier supérieur ou égal à 1 ;
le fait de déterminer (220), sur la base d'un réseau neuronal préconfiguré, si un utilisateur correspondant à chaque première image de visage regarde un écran d'un dispositif, et si chaque première image de visage correspond à une image de visage prédéfinie ; et
lorsque chaque première image de visage correspond à l'image de visage prédéfinie et correspond à l'utilisateur, la commutation (230) de l'écran d'un état d'écran éteint à un état d'écran allumé ;
dans lequel le fait de déterminer (220), sur la base d'un réseau neuronal préconfiguré, si un utilisateur correspondant à chaque première image de visage regarde un écran d'un dispositif, et si chaque première image de visage correspond à une image de visage prédéfinie comprend :

le fait de déterminer, à l'aide du réseau neuronal préconfiguré, si chaque première image de visage correspond à l'utilisateur regardant l'écran du dispositif ; et
lorsque chaque première image de visage correspond à l'utilisateur regardant l'écran du dispositif, le fait de déterminer, à l'aide du réseau neuronal préconfiguré, si chaque première image de visage correspond à l'image de visage prédéfinie.

**2.** Procédé selon la revendication 1, dans lequel le fait de déterminer, à l'aide du réseau neuronal préconfiguré, si chaque première image de visage correspond à l'utilisateur comprend :

la détermination, à **l'aide** du réseau neuronal préconfiguré, d'une valeur de probabilité que chaque première image de visage corresponde à l'utilisateur ; et
lorsque la valeur de probabilité est supérieure à un seuil prédéfini, la détermination que chaque première image de visage correspond à l'utilisateur.

**3.** Procédé selon l'une quelconque des revendications 1 et 2, dans lequel, après **l'obtention** (210) de M trames **d'image,** le procédé comprend également :

la détermination **d'une** première boîte de visage dans chaque trame d'image, dans lequel la première boîte de visage est une boîte de visage avec une plus grande surface dans au moins une boîte de visage comprise dans chaque trame d'image ; et

la détermination de la première image de visage sur la base d'une seconde image de visage située dans la première boîte de visage.

4. Procédé selon la revendication 3, comprenant également :

l'obtention d'informations de direction de visage, dans lequel les informations de direction de visage sont utilisées pour indiquer une direction de la seconde image de visage ; et
la détermination de la première image de visage sur la base d'une seconde image de visage située dans la première boîte de visage comprend :
lorsque la direction de la seconde image de visage ne correspond pas à une direction standard prédéfinie, la rotation de la seconde image de visage pour obtenir la première image de visage correspondant à la direction standard prédéfinie.

5. Procédé selon l'une quelconque des revendications 1 à 4, dans lequel l'obtention (210) de M trames d'image comprend :
l'obtention des M trames d'image lorsque l'écran est dans l'état d'écran éteint.

6. Procédé selon l'une quelconque des revendications 1 à 5, dans lequel le réseau neuronal préconfiguré est un réseau neuronal profond.

7. Appareil de réveil d'écran (400), comprenant :

une unité d'obtention (410), configurée pour obtenir M trames d'image, dans lequel chaque trame d'image comprend une première image de visage, et M est un entier supérieur ou égal à 1 ;
une unité de traitement (420), configurée pour déterminer, sur la base d'un réseau neuronal préconfiguré, si un utilisateur correspondant à chaque première image de visage regarde un écran d'un dispositif, et si chaque première image de visage correspond à une image de visage prédéfinie ; et
une unité de réveil (430), configurée pour :
lorsque chaque première image de visage correspond à l'image de visage prédéfinie et correspond à l'utilisateur, commuter l'écran d'un état d'écran éteint à un état d'écran allumé ;
dans lequel l'unité de traitement (420) est spécifiquement configurée pour :

déterminer, à l'aide du réseau neuronal préconfiguré, si chaque première image de visage correspond à l'utilisateur regardant l'écran du dispositif ; et
lorsque chaque première image de visage correspond à l'utilisateur regardant l'écran du dispositif, déterminer, à l'aide du réseau neuronal préconfiguré, si chaque première image de visage correspond à l'image de visage prédéfinie.

8. Appareil (400) selon la revendication **7,** dans lequel l'unité de traitement (420) est spécifiquement configurée pour :

déterminer, à l'aide du réseau neuronal préconfiguré, une valeur de probabilité que chaque première image de visage corresponde à l'utilisateur ; et
lorsque la valeur de probabilité est supérieure à un seuil prédéfini, déterminer que chaque première image de visage correspond à l'utilisateur.

9. Appareil (400) selon l'une quelconque des revendications 7 et 8, dans lequel l'unité de traitement (420) est également configurée pour :

déterminer une première boîte de visage dans chaque trame d'image, dans lequel la première boîte de visage est une boîte de visage avec une plus grande surface dans au moins une boîte de visage comprise dans chaque trame d'image ; et
déterminer la première image de visage sur la base d'une seconde image de visage située dans la première boîte de visage.

10. Appareil (400) selon la revendication 9, dans lequel l'unité d'obtention (410) est également configurée pour :

obtenir des informations de direction de visage, dans lequel les informations de direction de visage sont utilisées pour indiquer une direction de la seconde image de visage ; et
l'unité de traitement (420) est spécifiquement configurée pour :
lorsque la direction de la seconde image de visage ne correspond pas à une direction standard prédéfinie, faire tourner la seconde image de visage pour obtenir la première image de visage correspondant à la direction standard prédéfinie.

11. Appareil (400) selon l'une quelconque des revendications 7 à 10, dans lequel l'unité d'obtention (410) est spécifiquement configurée pour :

obtenir les M trames d'image lorsque l'écran est dans l'état d'écran éteint.

**12.** Appareil (400) selon l'une quelconque des revendications 7 à 11, dans lequel le réseau neuronal préconfiguré est un réseau neuronal profond.

**13.** Support de stockage lisible par ordinateur, comprenant un programme informatique, dans lequel, lorsque le programme informatique est exécuté sur un dispositif informatique ou un processeur, le dispositif informatique ou le processeur est activé pour mettre en œuvre le procédé selon l'une quelconque des revendications 1 à 6.

FIG. 1

<u>200</u>

Obtain M image frames, where each image frame includes a first face image, and M is an integer greater than or equal to 1 — 210

Determine, based on a preconfigured neural network, whether each first face image matches a preset face image and belongs to a user who is gazing at a screen of a device — 220

When each first face image matches the preset face image and belongs to the user, switch the screen from a screen-off state to a screen-on state — 230

FIG. 2

Perform periodic screen-off detection, where a device is in a screen-off state — 301

Obtain a latest image frame in an image storage module as an input image of a network — 302

Determine whether there is a face image in the image — 303    No

Yes

Calculate a face box size, and obtain a largest face box and a face direction of the largest face box — 304

Crop a face region in the input image based on the largest face box — 306

Determine, based on the face direction, whether a face is a vertical face — 307    Yes

No — 308

Correct the face through flipping and transposition to obtain a corrected face image

Execute a gaze discrimination network by using the face image as an input, to output a gaze probability — 309

TO
FIG. 3B

TO
FIG. 3B

FIG. 3A

CONT.
FROM
FIG. 3A

CONT.
FROM
FIG. 3A

Compare the gaze probability
with a preset gaze threshold, and output whether the
face is gazing at a screen — 310 — No

Yes — 311

Execute an owner discrimination network by using the face image
as an input, to output a feature vector of the face image

Calculate a distance between the feature vector and a preset feature
vector of an owner face — 312

Compare the distance with a
preset distance threshold, and output whether the
face image belongs to an owner — 313 — No

Yes

Determine
whether the owner is gazing at the screen in M
consecutive frames — 314 — No

Yes — 315

Wake up the screen

The current image
frame is finished — 305

FIG. 3B

EP 3 910 507 B1

Screen wakeup apparatus 400

Obtaining unit 410

Processing unit 420

Wakeup unit 430

FIG. 4

27

Screen wakeup apparatus 500

| Periodic screen-off detection module | Image obtaining module |
|---|---|

Face detection + direction discrimination module

| Network inference module | → | Face region postprocessing module |
|---|---|---|

Gaze discrimination module

| Network inference module | → | Gaze discrimination postprocessing module |
|---|---|---|

Owner discrimination module

| Network inference module | → | Facial feature comparison module |
|---|---|---|

Wakeup processing module

| Smoothing processing module | → | Wakeup unit |
|---|---|---|

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110317872 A1
- WO 2014124663 A1
- WO 2019006985 A1
- US 10027883 B1